# EUROPÄISCHE PATENTSCHRIFT

(11) **EP 3 617 003 B1**
(45) Veröffentlichungstag und Bekanntmachung des Hinweises auf die Patenterteilung: **19.11.2025**
(21) Anmeldenummer: 19306038.1
(22) Anmeldetag: 28.08.2019
(51) Int. Cl.: B60R 16/02, B60R 16/023, H02G 3/06, H02G 3/04

(54) **FÜHRUNGSEINRICHTUNG ZUM FÜHREN WENIGSTENS EINES LEITUNGSELEMENTS, INSBESONDERE FÜR EIN KRAFTFAHRZEUG, SOWIE ANORDNUNG EINES LEITUNGSELEMENTS IN EINER SOLCHEN FÜHRUNGSEINRICHTUNG, INSBESONDERE FÜR EIN KRAFTFAHRZEUG**
GUIDING DEVICE FOR GUIDING AT LEAST ONE GUIDE ELEMENT, ESPECIALLY FOR A MOTOR VEHICLE, AND ARRANGEMENT OF A GUIDING ELEMENT IN SUCH A GUIDING DEVICE, ESPECIALLY FOR A MOTOR VEHICLE
DISPOSITIF PERMETTANT DE GUIDER AU MOINS UN ÉLÉMENT DE CONDUITE, EN PARTICULIER POUR UN VÉHICULE AUTOMOBILE, AINSI QU'AGENCEMENT D'UN ÉLÉMENT DE CONDUITE DANS UN TEL DISPOSITIF, EN PARTICULIER POUR UN VÉHICULE AUTOMOBILE

(30) Priorität: 30.08.2018 DE 102018121231
(43) Veröffentlichungstag der Anmeldung: 04.03.2020
(73) Patentinhaber: Nexans, 92400 Courbevoie (FR)
(72) Erfinder: ROSENBERGER, Johann, 4400 Steyr (AT); SCHMID, Matthias, 92685 Floss (DE); REICH, Alexander, 92685 Floss (DE)
(74) Vertreter: Ipsilon

(56) Entgegenhaltungen:
- EP-A2- 1 120 878
- EP-A2- 1 708 328
- DE-A1- 102011 089 515
- DE-T5- 112013 004 193
- DE-T5- 112014 005 923
- DE-U1- 202005 001 018
- DE-U1- 29 912 640
- JP-A- 2002 199 558
- JP-A- 2018 092 935
- US-A1- 2016 238 166

## Beschreibung

Die EP 2 933 542 B1 offenbart eine Anschlussverbindung für Wellrohre, mit einem Anschlusselement, einem gegen eine Innenwandfläche des Wellrohres formschlüssig anlegbaren Stützring und einem an einer Umfangsfläche des Wellrohres axial festlegbaren ersten Ringelement. Dabei ist ein Abschnitt des Wellrohres zwischen dem Stützring und dem ersten Ringelement eingeschlossen.

Der EP 0 775 865 A1 ist eine Anordnung zum Verbinden eines Endes eines schraubenlinienförmig gewellten Metallrohrs mit einem Anschlussstück als bekannt zu entnehmen. In das Ende des schraubenlinienförmig gewellten Metallrohrs ist ein Stützring mit einem der Wellung des Mantelrohres angepassten Grobgewinde eingeschraubt, welches sich über einen Bereich einer äußeren Oberfläche erstreckt.

Außerdem offenbart die EP 1 457 726 B1 ein Verfahren zur Herstellung einer Verbindung zwischen dem Ende eines schraubenlinienförmig gewellten Metallrohrs und einem Anschlussstück.

Aus dem allgemeinen Stand der Technik und insbesondere aus dem Serienfahrzeugbau ist es darüber hinaus bekannt, dass ein modernes Fahrzeug mit einer Vielzahl an Leitungselementen ausgestattet wird. Die Leitungselemente werden beispielsweise genutzt, um elektrischen Strom und/oder elektrische Signale zu übertragen. Um die Leitungselemente zeit- und kostengünstig verbauen zu können, kommen Führungseinrichtungen wie beispielsweise so genannte Kabelbäume zum Einsatz, in denen die auch als Kabel bezeichneten Leitungselemente verlaufen. Mittels eines solchen Kabelbaums können die Leitungselemente zeit- und kostengünstig verlegt sowie beispielsweise vor äußeren Einflüssen, insbesondere mechanischen Einflüssen, geschützt werden. Es hat sich gezeigt, dass die Montage einer solchen Führungseinrichtung selbst problembehaftet sein kann.

Aufgabe der vorliegenden Erfindung ist es daher, eine Führungseinrichtung und eine Anordnung zu schaffen, sodass die Führungseinrichtung zeit- und kostengünstig montiert werden kann.

Diese Aufgabe wird erfindungsgemäß durch eine Führungseinrichtung mit den Merkmalen des Patentanspruchs 1 sowie durch eine Anordnung mit den Merkmalen des Patentanspruchs 13 gelöst. Vorteilhafte Weiterbildungen der Erfindung lassen sich den übrigen Ansprüchen entnehmen.

Die erfindungsgemäße Führungseinrichtung zum Führen wenigstens eines Leitungselements, insbesondere für ein Kraftfahrzeug, zeichnet sich durch wenigstens ein, insbesondere geschlitztes, Wellrohr aus. Das Wellrohr ist beispielsweise schraubenlinienförmig gewellt und/oder weist wenigstens oder genau einen Schlitz auf. Das Wellrohr begrenzt zumindest einen auch als Führungskanal bezeichneten Kanal, entlang welchem das Leitungselement zu führen ist beziehungsweise geführt ist. Da das Wellrohr beispielsweise geschlitzt ist, kann es auf besonders zeit- und kostengünstige Weise um das Leitungselement umgeklappt, umgerollt oder umgeschlungen werden, sodass dadurch das Leitungselement, insbesondere nach dessen vollständiger Herstellung beziehungsweise Bestückung, zeit- und kostengünstig in dem Kanal und somit in dem Wellrohr angeordnet werden kann. Insbesondere ermöglicht es das vorzugsweise geschlitzte Wellrohr, das Leitungselement an wenigstens einem Ende oder beiden Enden zunächst mit einem Anschlusselement, insbesondere mit einem Stecker, zu versehen, wobei das Anschlusselement außerhalb des Wellrohrs angeordnet wird und/oder das Anschlusselement ist so groß, dass das Anschlusselement und somit das mit dem Anschlusselement versehene beziehungsweise verbundene Leitungselement nicht mehr in Längserstreckungsrichtung des Leitungselements beziehungsweise des Wellrohres, das heißt in axialer Richtung des Wellrohres in das Wellrohr eingesteckt und in dem Kanal entlang des Wellrohres gezogen werden kann.

Da das Wellrohr auf besonders einfache Weise um das bereits mit dem Anschlusselement verbundene Leitungselement herum angeordnet werden kann, kann das Leitungselement an sich zeit- und kostengünstig hergestellt und zeit- und kostengünstig mit dem Anschlusselement versehen werden. Außerdem kann das Leitungselement beziehungsweise zumindest ein Längenbereich des Leitungselements auf die beschriebene, einfache Weise innerhalb des Wellrohres und dabei in dem Kanal anzuordnen. Hierzu wird beispielsweise das Wellrohr entlang seines Schlitzes geöffnet, insbesondere aufgeklappt, aufgespannt oder aufgerollt, wodurch das Wellrohr elastisch verformt und der Schlitz vergrößert wird. Daraufhin kann beispielsweise das Leitungselement in radialer Richtung des Wellrohres beziehungsweise des Leitungselements in das Wellrohr und somit in den Kanal hinein beziehungsweise eingesteckt werden. Danach kann das Wellrohr zurückfedern, wodurch der Schlitz verkleinert oder geschlossen wird. Dadurch kann das Wellrohr besonders einfach um das Leitungselement umgeschlagen, beziehungsweise umgewickelt werden.

Das Wellrohr an sich ist vorzugsweise biegeschlaff beziehungsweise formlabil, sodass das Wellrohr und mit diesem das in dem Wellrohr anordenbare beziehungsweise angeordnete Leitungselement besonders einfach und bedarfsgerecht, insbesondere in einem Fahrzeug, verlegt werden können. Da das Leitungselement in dem Wellrohr anordenbar beziehungsweise angeordnet ist, kann das Wellrohr das Leitungselement vor äußeren, insbesondere mechanischen, Einflüssen sehr gut schützen.

Die erfindungsgemäße Führungseinrichtung umfasst darüber hinaus ein separat von dem Wellrohr ausgebildetes und vorzugsweise eigensteifes beziehungsweise formstabiles Gehäuseelement, in welchem ein Längenbereich des Wellrohres aufgenommen ist. Insbesondere ist das Wellrohr, beispielsweise zumindest entlang seiner axialen Richtung, über seinen Längenbereich zumindest mechanisch mit dem Gehäuseelement verbunden und somit an dem Gehäuseelement gehalten. Das Gehäuseelement bietet somit die Möglichkeit, das Wellrohr zumindest in dem genannten, beispielsweise als ein Endbereich oder Ende des Wellrohres ausgebildeten Längenbereich zu fixieren, sodass beispielsweise das Wellrohr ausgehend von einer Stelle, an welcher das Gehäuseelement, insbesondere im Fahrzeug, verbaut wird, besonders einfach und somit zeit- und kostengünstig verlegt werden kann.

Das Gehäuseelement weist eine auch als Aufnahmekammer oder auch Verteilkammer bezeichnete Kammer auf, wobei sich das Leitungselement von der Kammer in den Kanal und somit in das Wellrohr beziehungsweise umgekehrt erstrecken kann. In der Kammer sind das zuvor genannte Anschlusselement und somit das mit dem Anschlusselement verbundene Ende des Leitungselements in der Kammer aufgenommen. Dabei ist das Leitungselement mit dem Anschlusselement zumindest mechanisch und/oder elektrisch verbunden. Ist das Anschlusselement beispielsweise so groß, dass es nicht in dem Kanal angeordnet werden kann, da beispielsweise das Anschlusselement einen Außendurchmesser aufweist, welcher größer als ein Innendurchmesser des Kanals ist, so kann das Anschlusselement in der Kammer angeordnet sein. Ausgehend von dem Anschlusselement und somit ausgehend von der Kammer und von dem in der Kammer angeordneten Ende des Leitungselements kann sich das Leitungselement aus der Kammer in den Kanal beziehungsweise in das Wellrohr erstrecken.

In der Kammer kann das Anschlusselement beispielsweise mit einem weiteren Anschlusselement elektrisch und/oder mechanisch verbunden sein. Das Leitungselement ist beispielsweise zum Übertragen von elektrischem Strom beziehungsweise elektrischer Energie ausgebildet, wobei das Leitungselement auch als Kabel bezeichnet wird. Insbesondere kann das Leitungselement über das Anschlusselement mit einem weiteren Anschlusselement elektrisch und/oder mechanisch verbunden werden. Insbesondere ist es denkbar, dass das Gehäuseelement als Kabelverteiler fungiert, welcher auch als Kabelschacht bezeichnet wird. Dabei sind beispielsweise in dem Gehäuseelement mehrere Leitungselemente und somit mehrere Anschlusselemente angeordnet, welche sich ausgehend von dem Gehäuseelement, insbesondere ausgehend von der Kammer, in jeweilige Wellrohre und dabei von dem Gehäuseelement weg erstrecken beziehungsweise umgekehrt. Die mehreren Leitungselemente können somit in dem Gehäuse, insbesondere in der Kammer, zusammengeführt und beispielsweise mit einer gemeinsamen Strom- und/oder Signalquelle verbunden sein, die elektrische Energie beziehungsweise elektrische Signale bereitstellt.

Des Weiteren ist in dem Längenbereich des Leitungselements wenigstens ein innerhalb des Wellrohres und somit in dem Kanal angeordnetes Stützelement vorgesehen, mittels welchem das Wellrohr in radialer Richtung des Wellrohrs nach innen abstützbar oder abgestützt ist. Hierdurch können beispielsweise übermäßige Durchmesserverringerungen beziehungsweise Außenumfangsverringerungen des Wellrohres mittels des Stützelements vermieden werden, sodass sich das Wellrohr nicht unerwünschter Weise von dem Gehäuseelement lösen kann beziehungsweise sodass das Wellrohr nicht unerwünschter Weise aus dem Gehäuseelement ausknüpfen kann.

Das Wellrohr ist beispielsweise über den Längenbereich zumindest oder ausschließlich formschlüssig mit dem Gehäuseelement verbunden beziehungsweise an diesem gehalten. Hierzu wirkt beispielsweise der Längenbereich zumindest oder ausschließlich formschlüssig mit dem Gehäuseelement zusammen. Es wurde gefunden, dass insbesondere dann, wenn das Wellrohr auf Zug belastet, das heißt mit einer Zugbelastung beaufschlagt wird und beispielsweise dann, wenn in dem Wellrohr nur eine geringe Anzahl an Leitungselementen verläuft, eine Durchmesserverringerung, insbesondere eine Außendurchmesserverringerung des Wellrohres auftreten kann. Im Rahmen der Durchmesserverringerung wird beispielsweise ein Außendurchmesser beziehungsweise ein Außenumfang des Längenbereichs verkleinert, wodurch beispielsweise das formschlüssige Zusammenwirken des Längenbereichs mit dem Gehäuseelement aufgehoben wird. In der Folge kann das Wellrohr durch die Zugbelastung unerwünschter Weise aus dem Gehäuseelement heraus gezogen werden. Zu einer solchen Zugbelastung kann es durch aus unerwünschter Weise bei einer Montage der Führungseinrichtung insbesondere dann kommen, wenn das Wellrohr, insbesondere in einem Fahrzeug, verlegt und somit montiert wird.

Das Stützelement ist nun in dem in dem in dem Gehäuseelement angeordneten Längenbereich und dabei innerhalb des Wellrohres, das heißt in dem Kanal angeordnet und sorgt für eine besonders vorteilhafte Formstabilität des Wellrohres, insbesondere in radialer Richtung des Wellrohres. Das Stützelement kann eine übermäßige Verringerung des Außenumfangs zumindest des Längenbereichs bei einer Zugbelastung des Wellrohres vermeiden, sodass eine Aufhebung des formschlüssigen Zusammenwirkens zwischen dem Längenbereich und dem Gehäuseelement vermieden werden kann. In der Folge kann die Führungseinrichtung zeit- und kostengünstig montiert und dabei insbesondere verlegt werden. Außerdem kann die Führungseinrichtung besonders einfach hergestellt werden, da das Wellrohr auf besonders einfache Weise gehandhabt werden kann, derart, dass das Wellrohr auf einfache Weise in dem Gehäuseelement und das Leitungselement in dem Wellrohr angeordnet werden kann.

Grundsätzlich ist es denkbar, das Leitungselement oder ein mehrere Leitungselemente umfassendes und entlang des Kanals verlaufendes Leitungsbündel beispielsweise in dem Längenbereich zu unterwickeln. Dies ist jedoch ein undefinierter Prozess und bei einer hohen Anzahl an Wicklungen sehr kostenintensiv und nicht reproduktionssicher. Diese Probleme und Nachteile können durch den Einsatz des Stützelements vermieden werden.

Der Längenbereich des Wellrohres ist beispielsweise in einem auch als Abgang bezeichneten und beispielsweise als Stutzen ausgebildeten Anschluss des Gehäuseelements aufgenommen. Der Anschluss an sich weist beispielsweise einen wesentlich geringeren Innenumfang als die zuvor genannte Kammer auf, sodass der Anschluss innenumfangsseitig gegenüber der Kammer verjüngt ist. Hierdurch kann sich der Längenbereich in radialer Richtung des Wellrohres nach außen besonders gut an dem Anschluss beziehungsweise an Wandungen des Anschlusses abstützen, wobei diese Wandungen einen Anschlusskanal des Anschlusses begrenzen. Dabei ist der Längenbereich in dem Anschlusskanal angeordnet. Beispielsweise ist zumindest der Längenbereich in seinem in dem Anschluss angeordneten Zustand elastisch verformt, woraus eine Federkraft resultiert, mittels welcher der Längenbereich in radialer Richtung des Wellrohres nach außen in Stützanlage mit dem Anschluss beziehungsweise mit den Wandungen gehalten wird. Hierdurch wirkt beispielsweise der Längenbereich formschlüssig mit dem Anschluss beziehungsweise mit dem Gehäuseelement zusammen.

Das Stützelement ist dabei in dem Anschlusskanal angeordnet, wobei das Stützelement innerhalb des Wellrohres und dabei in dem Längenbereich angeordnet ist. Ein Öffnen, insbesondere ein Aufspannen, Aufklappen oder Auffächern des Wellrohres in radialer Richtung des Anschlusskanals nach außen ist durch die Wandungen verhindert. Eine übermäßige Durchmesser- beziehungsweise Außenumfangsverringerung des Längenbereich in radialer Richtung des Wellrohres nach innen hin kann oder wird durch das Stützelements beispielsweise bei einer Zugbelastung des Wellrohres verhindert werden beziehungsweise verhindert, sodass das Wellrohr über seinen Längenbereich sicher, insbesondere formschlüssig, mit dem Gehäuseelement, insbesondere mit dem Anschluss, verbunden ist. Dadurch kann das Wellrohr auch durch große, auf das Wellrohr wirkende und von dem Anschluss weg weisende Zugbelastungen nicht aus dem Anschluss beziehungsweise nicht aus dem Anschlusskanal heraus gezogen werden. Das Leitungselement, welches sich beispielsweise von der Kammer in das Wellrohr und somit in den Längenbereich und beispielsweise durch den Längenbereich erstreckt, verläuft dabei von der Kammer in den Anschlusskanal und beispielsweise durch den Anschlusskanal hindurch.

Um das Stützelement besonders zeit- und kostengünstig herstellen sowie montieren zu können, ist es in vorteilhafter Ausgestaltung der Erfindung vorgesehen, dass das Stützelement als ein Stützring, insbesondere als ein geschlitzter Stützring, ausgebildet ist. Hierdurch kann das Stützelement beispielsweise auf besonders einfache Weise auf das Leitungselement aufgefädelt werden. Ist der Stützring als ein geschlitzter Stützring ausgebildet, so weist der Stützring vorzugsweise wenigstens oder genau einen über seine komplette Erstreckung verlaufenden Schlitz auf. Um dabei das Leitungselement besonders zeit- und kostengünstig in dem Stützring anzuordnen, wird beispielsweise der Stützring aufgeweitet beziehungsweise aufgespannt, wodurch der Spalt vergrößert wird. Dann kann das Leitungselement in radialer Richtung des Stützrings in den Stützring hineinbewegt, insbesondere hinein gesteckt, werden. Daraufhin federt beispielsweise der Stützring zurück, wodurch sich der Spalt verkleinert oder gar aufhebt. Außerdem kann der Stützring dadurch beispielsweise besonders einfach in dem Anschluss angeordnet werden.

Eine weitere Ausführungsform zeichnet sich dadurch aus, dass das Stützelement aus einem Kunststoff gebildet ist. Hierdurch können das Stützelement und somit die Führungseinrichtung insgesamt zeit- und kostengünstig hergestellt werden.

Um die Kosten besonders gering zu halten, ist es in weiterer Ausgestaltung der Erfindung vorgesehen, dass das Stützelement einstückig ausgebildet ist. Insbesondere kann das Stützelement durch Kunststoff-Spritzgießen ausgebildet sein.

In weiterer Ausgestaltung der Erfindung weist das Stützelement wenigstens oder genau zwei Stützteile auf, wodurch das Stützelement auf besonders einfache und somit zeit- und kostengünstige Weise auf dem Leitungselement angeordnet werden kann. Dies bedeutet, dass das Leitungselement besonders einfach in dem Stützelement angeordnet werden kann.

Dabei hat es sich als besonders vorteilhaft gezeigt, wenn die Stützteile separat voneinander ausgebildet und miteinander verbunden, insbesondere ineinander gesteckt, sind. Hierdurch ist es beispielsweise möglich, das Leitungselement zunächst in einem der Stützteile anzuordnen, insbesondere in einem Zustand, in welchem die Stützteile noch nicht miteinander verbunden, das heißt noch voneinander gelöst sind. Daraufhin werden die Stützteile miteinander verbunden, insbesondere ineinander gesteckt, wodurch das Leitungselement auch in dem anderen Stützteil angeordnet wird. Auf diese Weise wird das Leitungselement in dem Stützelement angeordnet.

Das Stützelement weist eine Durchgangsöffnung auf, welche von dem Leitungselement durchdringbar oder durchdrungen ist. Die Durchgangsöffnung wird von dem Stützelement begrenzt. Insbesondere wird die Durchgangsöffnung jeweils teilweise, insbesondere jeweils zur Hälfte, durch das jeweilige Stützteil begrenzt. Dabei begrenzen die Stützteile die Durchgangsöffnung in miteinander verbundenem Zustand vollständig. Insbesondere ist es denkbar, dass die Durchgangsöffnung in Umfangsrichtung vollständig umlaufend geschlossen ist.

Um das Stützelement besonders einfach handhaben und montieren, das heißt auf dem Leitungselement anordnen, zu können, ist es in weiterer Ausgestaltung der Erfindung vorgesehen, dass die Stützteile, insbesondere über ein Filmscharnier, verschwenkbar miteinander verbunden sind. Somit wird das Leitungselement beispielsweise in aufgeschwenktem Zustand des Stützelements in einem der Stützteile angeordnet. Daraufhin wird das Stützelement zugeschwenkt, indem die Stützteile aufeinander zu geschwenkt werden. Dadurch wird das Leitungselement in dem Stützelement angeordnet. Da die Stützteile, insbesondere über das Filmscharnier, miteinander verbunden sind, können diese nicht verloren gehen beziehungsweise sich nicht voneinander lösen, obwohl das Stützelement geöffnet beziehungsweise aufgeschwenkt und geschlossen beziehungsweise zugeschwenkt werden kann. Im Rahmen des Öffnens des Stützelements werden die Stützteile voneinander weg geschwenkt. Zum Schließen des Stützelements werden die Stützteile aufeinander zu geschwenkt. Dabei ist es denkbar, dass die Stützteile, insbesondere formschlüssig, miteinander verbunden, insbesondere miteinander verrastet, sind, um ein unerwünschtes Öffnen des Stützelements vermeiden zu können.

Bei einer besonders vorteilhaften Ausführungsform der Erfindung weist das Wellrohr wenigstens oder genau einen über seine komplette Erstreckung verlaufenden Schlitz auf. Hierdurch kann das Leitungselement auf besonders einfache und somit zeit- und kostengünstige Weise in dem Wellrohr und somit in dem Kanal angeordnet werden. Hierzu wird das Wellrohr beispielsweise elastisch verformt und dabei aufgebogen, wodurch der Schlitz vergrößert wird. Daraufhin kann das Leitungselement in radialer Richtung des Wellrohres durch den Schlitz hindurch bewegt und somit in den Kanal hinein bewegt werden. Daraufhin kann das Wellrohr beispielsweise zurück federn, wodurch der Schlitz verkleinert oder geschlossen wird.

Als weiterhin vorteilhaft hat es sich gezeigt, wenn das Wellrohr einstückig ausgebildet und/oder aus einem Kunststoff gebildet ist. Dadurch können die Kosten der Führungseinrichtung in einem besonders geringen Rahmen gehalten werden.

Bei einer weiteren vorteilhaften Ausführungsform der Erfindung weist das Gehäuseelement wenigstens oder genau zwei Gehäuseteile auf. Hierdurch kann der Längenbereich des Wellrohres auf besonders einfache Weise in dem Gehäuseelement, insbesondere in dem Anschluss, angeordnet werden. Dadurch kann die Führungseinrichtung besonders zeit- und kostengünstig hergestellt und montiert werden.

Dabei hat es sich als besonders vorteilhaft gezeigt, wenn die Gehäuseteile separat voneinander ausgebildet und miteinander verbunden, insbesondere ineinander gesteckt, sind. Um beispielsweise den Längenbereich in dem Gehäuseelement, insbesondere in dem Anschluss, zu montieren, wird der Längenbereich beispielsweise zunächst in einem der Gehäuseteile angeordnet. Das eine Gehäuseteil bildet beispielsweise einen ersten Teil des Anschlusses, sodass der Längenbereich in dem ersten Teil des Anschlusses angeordnet wird. Der Längenbereich wird insbesondere in einem solchen Zustand in dem einen Gehäuseteil angeordnet, in welchem die Gehäuseteile voneinander gelöst sind. daraufhin werden die Gehäuseteile miteinander verbunden, sodass das Wellrohr auch in dem anderen Gehäuseteil angeordnet wird. Das andere Gehäuseteil bildet beispielsweise einen zweiten Teil des Anschlusses, sodass das Wellrohr durch Verbinden der Gehäuseteile auch in dem zweiten Teil des Anschlusses angeordnet wird. Auf diese Weise wird der Längenbereich besonders zeit- und kostengünstig in dem Anschluss und dabei in dem Gehäuseelement angeordnet.

Schließlich hat es sich als vorteilhaft gezeigt, wenn die Gehäuseteile, insbesondere über ein Filmscharnier, verschwenkbar miteinander verbunden sind. dadurch können die Gehäuseteile besonders einfach gehandhabt und miteinander verbunden werden.

Im Vergleich zu herkömmlichen Lösungen ermöglicht die erfindungsgemäße Führungseinrichtung eine geringere Montagezeit und die Realisierung eines definierten und reproduzierbaren Prozesses, in dessen Rahmen die Führungseinrichtung hergestellt und, insbesondere zusammen mit dem Leitungselement, montiert wird. Außerdem kann ein definierter und fester Sitz des Wellrohres in dem Gehäuseelement, insbesondere in dem als Aufnahme für den Längenbereich beziehungsweise für das Wellrohr fungierenden Anschluss, realisiert werden, sodass die Führungseinrichtung besonders einfach gehandhabt und montiert werden kann.

Die Führungseinrichtung ist vorzugsweise als ein Kabelbaum oder als ein Teil eines Kabelbaums eines Fahrzeugs, insbesondere eines Kraftfahrzeugs, ausgebildet. Dies ist insofern vorteilhaft, als Kabelbäume üblicherweise komplexe und große Bauteile sind, wobei nun durch Einsatz der erfindungsgemäßen Führungseinrichtung ein solcher Kabelbaum einfach und kostengünstig hergestellt und montiert werden kann. Dauerlauf-Erprobung mit Prototypen in Kabelsätzen für Verbrennungskraftmaschinen haben gezeigt, dass durch den Einsatz des Stützring ein unerwünschtes Lösen des Wellrohres aus beziehungsweise von dem Gehäuseelement, insbesondere aus beziehungsweise von dem Anschluss, auch dann sicher vermieden werden kann, wenn es zu einer hohen und beispielsweise unbeabsichtigten, auf das Wellrohr wirkenden Zugbelastung kommt.

Zur Erfindung gehört auch eine Anordnung wenigstens eines Leitungselements in einer Führungseinrichtung, insbesondere in einer erfindungsgemäßen Führungseinrichtung, zum Führen des Leitungselements. Bei der Anordnung erstreckt sich das teilweise in einem Gehäuseelement, insbesondere in der zuvor genannten Kammer, und teilweise in einem separat von dem Gehäuseelement ausgebildeten und vorzugsweise geschlitzten Wellrohr der Führungseinrichtung aufgenommene Leitungselement von dem Gehäuseelement, insbesondere von der Kammer, in einen durch das Wellrohr begrenzten Kanal, entlang welchem das Leitungselement geführt ist. Dabei ist in dem Gehäuseelement. Insbesondere in dem vorgenannten Anschluss, ein Längenbereich des Wellrohrs aufgenommen. Der Längenbereich wirkt beispielsweise formschlüssig mit dem Gehäuseelement, insbesondere mit dem Anschluss, zusammen, wodurch das Wellrohr, insbesondere entlang seiner Längserstreckungsrichtung, zumindest mechanisch mit dem Gehäuseelement verbunden ist. Insbesondere wirkt eine außenumfangsseitige Mantelfläche des Längenbereichs formschlüssig mit dem Gehäuseelement, insbesondere mit einer innenumfangsseitigen Mantelfläche des Gehäuseelements und dabei beispielsweise des Anschlusses, formschlüssig zusammen.

Des Weiteren ist es vorgesehen, dass in dem Längenbereich wenigstens ein innerhalb des Wellrohrs angeordnetes Stützelement angeordnet ist, mittels welchem das Wellrohr in radialer Richtung des Wellrohrs nach innen abstützbar oder abgestützt ist. Vorteile und vorteilhafte Ausgestaltungen der erfindungsgemäßen Führungseinrichtung sind als Vorteile und vorteilhafte Ausgestaltungen der erfindungsgemäßen Anordnung anzusehen und umgekehrt.

Als besonders vorteilhaft hat es sich gezeigt, wenn das vorzugsweise als ein Stützring ausgebildete Stützelement, insbesondere auf wenigstens oder genau einer Seite, einen Anschlag aufweist, welcher beispielsweise durch einen Bund des Stützelements, insbesondere des Stützrings, ausgebildet ist. Über den Anschlag kann das Stützelement entlang seiner axialen Richtung beziehungsweise in axialer Richtung des Wellrohrs an dem Wellrohr abgestützt werden. Hierdurch kann für eine das Stützelement an dem Wellrohr montierende Person eine besonders einfache Montage des Stützelements geschaffen werden, da das Stützelement nicht in das Wellrohr rutschen kann. Des Weiteren kann der Anschlag sicherstellen, dass nach der Montage des Stützelements dessen Position in dem Wellrohr beziehungsweise in dem beispielsweise als Anschlussbereich ausgebildeten Längenbereich erhalten oder bestehen bleibt, wodurch die gewünschte Wirkweise des Stützelements abgesichert ist.

Das Wellrohr muss nicht notwendigerweise als ein geschlitztes Wellrohr ausgebildet sein, sodass das Wellrohr als ein nicht-geschlitztes beziehungsweise schlitzloses oder geschlossenes Wellrohr ausgebildet sein kann.

Um das vorzugsweise als Stützring ausgebildete Stützelement zu montieren, wird das Stützelement beispielsweise in axialer Richtung des Stützelements beziehungsweise in axialer Richtung des Wellrohr in das Wellrohr, insbesondere in den Kanal, geschoben.

Dabei kann das Stützelement beispielsweise über den oben beschriebenen Anschlag an dem Wellrohr abgestützt werden.

Als weiterhin vorteilhaft hat es sich gezeigt, wenn das Stützelement farbig ist und dabei eine von der Farbe des Wellrohrs unterschiedliche Farbe aufweist. Beispielsweise ist der Stützring weiß oder naturfarben, wobei das Wellrohr dunkler als das Stützelement, insbesondere schwarz, sein kann. Hierdurch weist das Stützelement einen besonders starken Kontrast gegenüber dem Wellrohr auf, sodass das Stützelement besonders gut optisch beziehungsweise visuell wahrgenommen und/oder erfasst werden kann. Hierdurch kann eine einfache und präzise Kontrolle, insbesondere Selbstkontrolle, realisiert werden, in deren Rahmen beispielsweise bei einer Kabelbaumfertigung einfach überprüft werden kann, ob sich das Stützelement nach seiner Montage in einer gewünschten Position befindet. Der Kontrast zwischen dem Wellrohr und dem Stützring ermöglicht beispielsweise eine Kameraabfrage, in deren Rahmen der Stützring, insbesondere dessen Position, mittels wenigstens einer Kamera erfasst und überprüft wird. Hierdurch kann eine qualitative Absicherung realisiert werden.

Einzelheiten der Erfindung ergeben sich im Weiteren anhand der Figurenbeschreibung sowie der Zeichnungen. Hierbei zeigt:
- Fig. 1: ausschnittsweise eine schematische und geschnittene perspektivische Draufsicht einer erfindungsgemäßen Führungseinrichtung zum Führen wenigstens eines Leitungselements, insbesondere für ein Fahrzeug; und
- Fig. 2: eine schematische Querschnittsansicht einer erfindungsgemäßen, die Führungseinrichtung umfassenden Anordnung des Leitungselements in der Führungseinrichtung.

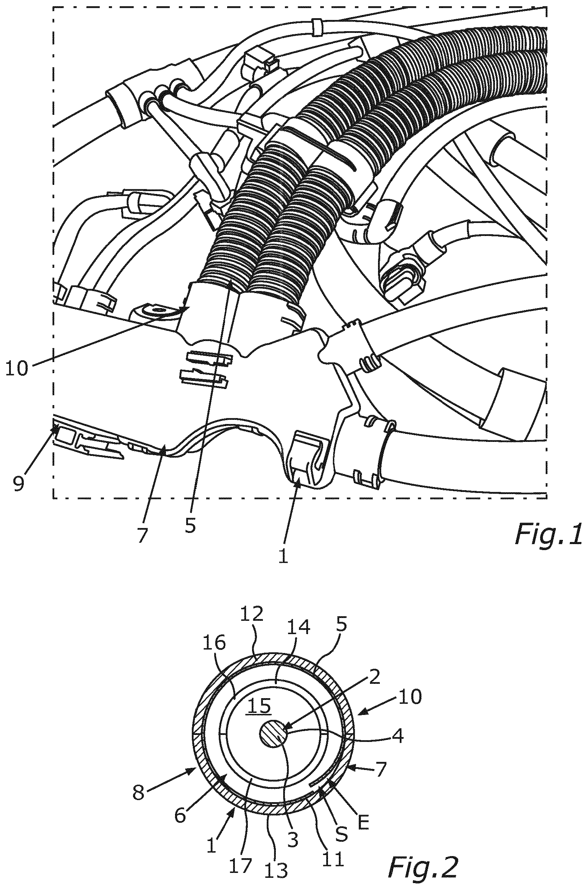

Fig. 1 zeigt ausschnittsweise in einer schematischen und perspektivischen Draufsicht eine Führungseinrichtung 1 zum Führen wenigstens eines aus Fig. 2 erkennbaren Leitungselements 2 für ein Fahrzeug, insbesondere für ein Kraftfahrzeug wie beispielsweise einen Kraftwagen. Bei dem in den Fig. veranschaulichten Ausführungsbeispiel ist das Leitungselement 2 zum Übertragen von elektrischem Strom beziehungsweise elektrischer Energie und/oder zum Übertragen von elektrischen Signalen ausgebildet. Das Leitungselement 2 wird somit auch als Kabel bezeichnet. Das Leitungselement 2 weist beispielsweise wenigstens oder genau eine Ader 3 auf, welche beispielsweise aus einem elektrisch leitfähigen Werkstoff, insbesondere aus einem elektrisch leitfähigen metallischen Werkstoff, gebildet ist. Außerdem weist das Leitungselement 2 eine elektrisch isolierende Ummantelung 4 auf, welche die Ader, welche auch als Litze bezeichnet wird, ummantelt. Beispielsweise ist die Ummantelung 4 aus einem elektrisch isolierenden Kunststoff gebildet.

Wie besonders gut aus Fig. 1 und 2 erkennbar ist, weist die Führungseinrichtung 1 wenigstens ein geschlitztes Wellrohr 5 auf, welches zumindest einen auch als Führungskanal bezeichneten Kanal 6 begrenzt. Entlang des Führungskanals ist beziehungsweise wird das Leitungselement 2 zu führen beziehungsweise geführt. Aus Fig. 1 ist erkennbar, dass die Führungseinrichtung 1 mehrere Wellrohre aufweist, wobei die Führungseinrichtung 1 als Kabelbaum oder Kabelsatz ausgebildet ist. Dabei können die folgenden und vorherigen Ausführungen zum Wellrohr 5 ohne weiteres auch auf die anderen Wellrohre der Führungseinrichtung 1 übertragen werden und umgekehrt.

Die Führungseinrichtung 1 umfasst darüber hinaus ein separat von dem Wellrohr 5 ausgebildetes Gehäuseelement 7, welches auch als Schacht, Kabelschacht, Verteiler oder Kabelverteiler bezeichnet wird. Fig. 2 zeigt in einer schematischen Querschnittsansicht eine Anordnung 8 des Leitungselements 2 in der Führungseinrichtung 1. Bei der Anordnung 8 ist das Leitungselement 2 teilweise in dem Wellrohr 5 und teilweise in dem Gehäuseelement 7 angeordnet und erstreckt sich entlang des Kanals 6.

Das Gehäuseelement 7 weist einen Grundkörper 9 auf, welcher eine in den Fig. nicht erkennbare Kammer aufweist beziehungsweise begrenzt. Die Kammer weist dabei einen ersten Innenumfang auf. Außerdem weist das Gehäuseelement 7 einen auch als Stutzen bezeichneten oder als Stutzen ausgebildeten Anschluss 10 auf, welcher einen Anschlusskanal begrenzt beziehungsweise bildet. Der Anschlusskanal ist in Fig. 2 erkennbar und dort mit 11 bezeichnet. Der Anschlusskanal 11 mündet in die Kammer, sodass der Anschlusskanal 11 mit der Kammer fluidisch verbunden ist. Der Anschluss 10 und der Grundkörper 9 sind beispielsweise einstückig miteinander ausgebildet. Ein Leitungsende des Leitungselements 2 ist in der Kammer angeordnet, sodass sich das Leitungselement 2 ausgehend von dem genannten Leitungsende und somit ausgehend von der Kammer in den Anschlusskanal 11 und durch diesen hindurch erstreckt. Somit durchdringt das Leitungselement 2 den Anschlusskanal 11. Der Anschlusskanal 11 ist durch eine innenumfangsseitige Mantelfläche des Anschlusses 10 gebildet beziehungsweise begrenzt.

Aus Fig. 2 ist erkennbar, dass ein Längenbereich des Wellrohres 5 in dem Anschlusskanal 11 und somit in dem Anschluss 10 angeordnet ist, wobei der Längenbereich des Wellrohres 5 vorliegend ein Ende des Wellrohres 5 bildender beziehungsweise aufweisender Endbereich E des Wellrohres 5 ist. Somit ist der Endbereich E in dem Anschlusskanal 11 und somit in dem Anschluss 10 angeordnet, sodass der Endbereich E (Längenbereich) in dem Gehäuseelement 7 angeordnet ist. Aus Fig. 2 ist erkennbar, dass eine außenumfangsseitige Mantelfläche des Wellrohres 5 sich in Stützanlage mit dem Anschluss 10, insbesondere mit der innenumfangsseitigen Mantelfläche des Anschlusses 10, befindet, wobei beispielsweise das Wellrohr 5, insbesondere eine außenumfangsseitige Mantelfläche des Wellrohres 5, formschlüssig mit dem Anschluss 10, insbesondere mit der innenumfangsseitigen Mantelfläche des Anschluss 10, zusammenwirkt. Dadurch ist beispielsweise das Wellrohr 5 entlang seiner Längserstreckungsrichtung, insbesondere formschlüssig, an dem Anschluss 10 und somit an dem Gehäuseelement 7 insgesamt gehalten.

Das Wellrohr 5 ist geschlitzt. Dabei weist das Wellrohr 5 über seine gesamte, in Längserstreckungsrichtung des Wellrohres 5 verlaufende Erstreckung wenigstens oder genau einen Schlitz S auf. Dadurch kann das Leitungselement 2 besonders einfach in dem Kanal 6 angeordnet werden. Hierzu wird das Wellrohr 5 beispielsweise derart elastisch verformt, dass der Spalt S vergrößert und dabei geöffnet wird. Dann kann das Leitungselement 2 in radialer Richtung des Wellrohres 5 durch den Schlitz S hindurchbewegt und in den Kanal 6 hinein bewegt werden. Daraufhin kann das Wellrohr 5 zurückfedern, wodurch der Schlitz S zumindest verringert oder geschlossen wird. Dann ist das Leitungselement 2 in dem Wellrohr 5 und dabei in dem Wellrohr 5 angeordnet.

Das Gehäuseelement 7 weist beispielsweise zwei separat voneinander ausgebildete und miteinander verbundene Gehäuseteile 12 und 13 auf, welche jeweilige Teile des Grundkörpers 9 und des Anschlusses 10 bilden und somit jeweilige Teile der Kammer und des Anschlusskanals 11 bilden beziehungsweise begrenzen. Hierdurch kann das Wellrohr 5 auf besonders einfache Weise in dem Gehäuseelement 7 angeordnet und mit diesem verbunden werden, in dem das Wellrohr 5 beispielsweise zunächst in das Gehäuseteil 13 eingelegt wird, insbesondere während das Gehäuseteil 13 von dem Gehäuseteil 12 gelöst ist. Dann wird das Gehäuseteil 12 mit dem Gehäuseteil 13 zusammengesetzt, wodurch das Wellrohr 5, insbesondere der Endbereich E, in dem Gehäuseelement 7 angeordnet wird.

Falls keine entsprechenden Gegenmaßnahmen getroffen sind, kann eine auf das Wellrohr 5 wirkende und von dem Gehäuseelement 7 weg weisende Zugbelastung des Wellrohres 5 dazu führen, dass sich zumindest der Endbereich E in seinem Außenumfang verkleinert. Dies wird auch als Außenumfangsverkleinerung des Endbereichs E bezeichnet. In Folge der Außenumfangsverkleinerung kann das formschlüssige Zusammenwirken des Endbereichs E mit dem Anschluss 10 aufgehoben werden, sodass das Wellrohr 5 aufgrund der Zugbelastung aus dem Gehäuseelement 7 ausknüpfen und somit aus dem Anschluss 10 herausgezogen werden kann.

Um nun ein unerwünschtes Lösen des Wellrohres 5 von dem Gehäuseelement 7 sicher vermeiden zu können, weist die Führungseinrichtung 1 wenigstens ein in dem Endbereich E und dabei innerhalb des Wellrohres 5 angeordnetes Stützelement in Form eines Stützrings 14 auf, welcher das Leitungselement 2 umgibt. Der Stützring 14 weist eine Durchgangsöffnung 15 auf, welche von dem Leitungselement 2 durchdrungen ist. Da der Stützring 14 in dem Endbereich E angeordnet ist, ist der Stützring 14 in dem Anschluss 10 angeordnet. Dadurch führt eine auf das Wellrohr 5 wirkende Zugbelastung nicht zu einer übermäßigen Außenumfangsverkleinerung des Endbereichs E, sodass der Endbereich E auch bei einer solchen Zugbelastung noch formschlüssig mit dem Anschluss 10, insbesondere mit der innenumfangsseitigen Mantelfläche des Anschluss 10, zusammenwirkt. Dadurch wird das Wellrohr 5 gegen ein Ausknüpfen aus dem Gehäuseelement 7 gesichert. Der Stützring 14 ist separat von dem Gehäuseelement 7, separat von dem Wellrohr 5 und separat von dem Leitungselement 2 ausgebildet. Der Stützring 14 ist separat von dem Wellrohr 5 und separat von dem Gehäuseelement 7 ausgebildet. Vorzugsweise ist der Stützring 14 auch separat von dem Leitungselement 2 ausgebildet!

Außerdem kann der Stützring 14 in seiner Umfangsrichtung vollständig umlaufend geschlossen sein. Alternativ ist es denkbar, dass der Stützring 14 als geschlitzter Stützring ausgebildet ist. Der Stützring 14 kann einstückig ausgebildet sein, oder der Stützring 14 weist wenigstens oder genau zwei Stützteile 16 und 17 auf Die Stützteile 16 und 17 sind jeweils als Ringteile beziehungsweise Ringsegmente ausgebildet. Die Stützteile 16 und 17 sind beispielsweise separat voneinander ausgebildete und miteinander verbundene Bauteile. Hierdurch kann beispielsweise das Leitungselement 2 besonders einfach in dem Stützring 14 angeordnet werden. Dies ist insbesondere dann vorteilhaft, wenn nicht nur ein Leitungselement sondern ein mehrere Leitungselemente umfassendes Leitungsbündel durch das Wellrohr 5 und somit durch den Stützring 14 hindurch verlegt wird. Das Leitungsbündel kann beispielsweise zunächst in dem Stützteil 17 angeordnet werden, währen das Stützteil 17 von dem Stützteil 16 gelöst ist. Daraufhin wird das Stützteil 16 mit dem Stützteil 17 verbunden, wodurch das Leitungsbündel in dem Stützring 14 und dabei in der Durchgangsöffnung 15 angeordnet wird.

Beispielsweise werden die Stützteile 16 und 17 miteinander verrastet, insbesondere in dem sie ineinander gesteckt werden. Ferner ist es denkbar, dass die Stützteile 16 und 17 über ein Scharnier, insbesondere über ein Filmscharnier verschwenkbar miteinander verbunden sind, sodass die Stützteile 16 und 17 voneinander weg und aufeinander zu geschwenkt werden können. Um beispielsweise das Leitungselement 2 in dem Stützring 14 anzuordnen, werden die Stützteile 16 und 17 zunächst voneinander weg geschwenkt. Dann kann das Leitungselement 2 in seine radiale Richtung und dabei in radialer Richtung des Stützrings 14 in den Stützring 14 hinein bewegt werden. Daraufhin werden die Stützteile 16 und 17 aufeinander zu geschwenkt, wodurch der Stützring 14 geschlossen wird.

Insbesondere ist es denkbar, dass die Stützteile 16 und 17 insbesondere auch dann einstückig miteinander ausgebildet sind, wenn die Stützteile 16 und 17 über das genannte Filmscharnier verschwenkbar miteinander verbunden sind. Alternativ dazu ist es denkbar, dass Stützteile 16 und 17 vollständig voneinander separat ausgebildet und dabei miteinander verbunden, insbesondere verschwenkbar miteinander verbunden, sind.

### Bezugszeichenliste

- 1: Führungseinrichtung
- 2: Leitungselement
- 3: Ader
- 4: Ummantelung
- 5: Wellrohr
- 6: Kanal
- 7: Gehäuseelement
- 8: Anordnung
- 9: Grundkörper
- 10: Anschluss
- 11: Anschlusskanal
- 12: Gehäuseteil
- 13: Gehäuseteil
- 14: Stützelement
- 15: Durchgangsöffnung
- 16: Stützteil
- 17: Stützteil
- E: Endbereich
- S: Schlitz

## Patentansprüche

1. Führungseinrichtung (1) zum Führen wenigstens eines mit einem Anschlusselement zur elektrischen und/oder mechanischen Verbindung verbundenen Leitungselements (2), mit wenigstens einem Wellrohr (5), welches zumindest einen Kanal (6) begrenzt, entlang welchem das Leitungselement (2) zu führen ist, und mit einem separat von dem Wellrohr (5) ausgebildeten Gehäuseelement (7), in welchem ein Längenbereich (E) des Wellrohrs (5) aufgenommen und mechanisch mit dem Gehäuseelement verbunden ist, wobei in dem Längenbereich (E) wenigstens ein in das Wellrohr (5) eingeschobenes Stützelement (14) vorgesehen ist, mittels welchem das Wellrohr (5) in radialer Richtung des Wellrohrs (5) nach innen abstützbar ist, und welches das Leitungselement (2) umgibt, und wobei das Gehäuseelement eine Kammer aufweist, in welche sich der von dem Wellrohr (5) begrenzte Kanal (6) erstreckt, und in welcher das Anschlusselement und das mit dem Anschlusselement verbundene Ende des Leitungselements (2) zur elektrischen und/oder mechanischen Verbindung mit einem weiteren Anschlusselement aufnehmbar ist.

2. Führungseinrichtung (1) nach Anspruch 1,
**dadurch gekennzeichnet, dass**
das Stützelement (14) als ein Stützring (14), insbesondere als ein geschlitzter Stützring (14), ausgebildet ist.

3. Führungseinrichtung (1) nach Anspruch 1 oder 2,
**dadurch gekennzeichnet, dass**
das Stützelement (14) aus einem Kunststoff gebildet ist.

4. Führungseinrichtung (1) nach einem der vorhergehenden Ansprüche,
**dadurch gekennzeichnet, dass**
das Stützelement (14) einstückig ausgebildet ist.

5. Führungseinrichtung (1) nach einem der vorhergehenden Ansprüche,
**dadurch gekennzeichnet, dass**
das Stützelement (14) wenigstens oder genau zwei Stützteile (16, 17) aufweist.

6. Führungseinrichtung (1) nach Anspruch 5 und nach einem der Ansprüche 1 bis 3, **dadurch gekennzeichnet, dass**
die Stützteile (16, 17) separat voneinander ausgebildet und miteinander verbunden, insbesondere ineinander gesteckt, sind.

7. Führungseinrichtung (1) nach Anspruch 5 oder 6,
**dadurch gekennzeichnet, dass**
die Stützteile (16, 17), insbesondere über ein Filmscharnier, verschwenkbar miteinander verbunden sind.

8. Führungseinrichtung (1) nach einem der vorhergehenden Ansprüche,
**dadurch gekennzeichnet, dass**
das Wellrohr (5) wenigstens oder genau einen über seine kompletten Erstreckung verlaufenden Schlitz (S) aufweist.

9. Führungseinrichtung (1) nach einem der vorhergehenden Ansprüche,
**dadurch gekennzeichnet, dass**
das Wellrohr (5) einstückig ausgebildet und/oder aus einem Kunststoff gebildet ist.

10. Führungseinrichtung (1) nach einem der vorhergehenden Ansprüche,
**dadurch gekennzeichnet, dass**
das Gehäuseelement (7) wenigstens oder genau zwei Gehäuseteile (12, 13) aufweist.

11. Führungseinrichtung (1) nach Anspruch 10,
**dadurch gekennzeichnet, dass**
die Gehäuseteile (12, 13) separat voneinander ausgebildet und miteinander verbunden, insbesondere ineinander gesteckt, sind.

12. Führungseinrichtung (1) nach Anspruch 10 oder 11,
**dadurch gekennzeichnet, dass**
die Gehäuseteile (12, 13), insbesondere über ein Filmscharnier, verschwenkbar miteinander verbunden sind.

13. Anordnung (8) wenigstens eines Leitungselements (2) in einer Führungseinrichtung (1) nach einem oder mehreren der Ansprüche 1 bis 12.

## Claims

1. Guide device (1) for guiding at least one line element (2) connected to a connecting element for electrical and/or mechanical connection, having at least one corrugated tube (5) which delimits at least one duct (6) along which the line element (2) is to be guided, and having a housing element (7) which is formed separately from the corrugated tube (5) and in which a longitudinal region (E) of the corrugated tube (5) is received and mechanically connected to the housing element, wherein provided in the longitudinal region (E) is at least one support element (14) which is inserted into the corrugated tube (5) and by means of which the corrugated tube (5) can be supported inwardly in the radial direction of the corrugated tube (5) and which surrounds the line element (2), and wherein the housing element comprises a chamber into which the duct (6) delimited by the corrugated tube (5) extends and in which the connecting element and the end of the line element (2) connected to the connecting element for electrical and/or mechanical connection to an additional connecting element is able to be received.

2. Guide device (1) according to Claim 1,
**characterized in that**
the support element (14) is formed as an annular support (14), in particular as a slotted annular support (14).

3. Guide device (1) according to Claim 1 or 2, **characterized in that**
the support element (14) is formed from a plastics material.

4. Guide device (1) according to one of the preceding claims,
**characterized in that**
the support element (14) is of an integral design.

5. Guide device (1) according to one of the preceding claims,
**characterized in that**
the support element (14) has at least or exactly two support parts (16, 17).

6. Guide device (1) according to Claim 5 and according to one of Claims 1 to 3,
**characterized in that**
the support parts (16, 17) are formed separately from one another and connected to one another, in particular inserted into one another.

7. Guide device (1) according to Claim 5 or 6, **characterized in that**
the support parts (16, 17) are pivotably connected to one another, in particular by way of an integral hinge.

8. Guide device (1) according to one of the preceding claims,
**characterized in that**
the corrugated tube (5) has at least or exactly one slot (S) which extends over its complete extent.

9. Guide device (1) according to one of the preceding claims,
**characterized in that**
the corrugated tube (5) is of an integral design and/or formed from a plastics material.

10. Guide device (1) according to one of the preceding claims,
**characterized in that**
the housing element (7) has at least or exactly two housing parts (12, 13).

11. Guide device (1) according to Claim 10,
**characterized in that**
the housing parts (12, 13) are formed separately from one another and connected to one another, in particular inserted into one another.

12. Guide device (1) according to Claim 10 or 11, **characterized in that**
the housing parts (12, 13) are pivotably connected to one another, in particular by way of an integral hinge.

13. Assembly (8) consisting of at least one line element (2) in a guide device (1) according to one or a plurality of Claims 1 to 12.

## Revendications

1. Dispositif de guidage (1) pour guider au moins un élément de conduite (2) relié à un élément de raccordement pour la liaison électrique et/ou mécanique, avec au moins un tube ondulé (5) qui délimite au moins un canal (6) le long duquel l'élément de conduite (2) doit être guidé, et avec un élément de boîtier (7) réalisé séparément du tube ondulé (5), dans lequel une zone longitudinale (E) du tube ondulé (5) est reçue et reliée mécaniquement à l'élément de boîtier, au moins un élément de support (14) inséré dans le tube ondulé (5) étant prévu dans la zone longitudinale (E), au moyen duquel le tube ondulé (5) peut être soutenu vers l'intérieur dans la direction radiale du tube ondulé (5), et qui entoure l'élément de conduite (2), et l'élément de boîtier présentant une chambre dans laquelle s'étend le canal (6) délimité par le tube ondulé (5) et dans laquelle l'élément de raccordement et l'extrémité de l'élément de conduite (2) reliée à l'élément de raccordement peuvent être reçus pour la liaison électrique et/ou mécanique avec un autre élément de raccordement.

2. Dispositif de guidage (1) selon la revendication 1, **caractérisé en ce que**
l'élément de support (14) est réalisé sous la forme d'une bague de support (14), notamment sous la forme d'une bague de support fendue (14).

3. Dispositif de guidage (1) selon la revendication 1 ou 2,
**caractérisé en ce que**
l'élément de support (14) est formé d'une matière plastique.

4. Dispositif de guidage (1) selon l'une quelconque des revendications précédentes,
**caractérisé en ce que**
l'élément de support (14) est réalisé d'un seul tenant.

5. Dispositif de guidage (1) selon l'une quelconque des revendications précédentes,
**caractérisé en ce que**
l'élément de support (14) présente au moins ou exactement deux parties de support (16, 17).

6. Dispositif de guidage (1) selon la revendication 5 et selon l'une quelconque des revendications 1 à 3, **caractérisé en ce que**
les parties de support (16, 17) sont réalisées séparément les unes des autres et reliées entre elles, notamment emboîtées les unes dans les autres.

7. Dispositif de guidage (1) selon la revendication 5 ou 6,
**caractérisé en ce que**
les parties de support (16, 17) sont reliées entre elles de manière pivotante, notamment par une charnière à film.

8. Dispositif de guidage (1) selon l'une quelconque des revendications précédentes,
**caractérisé en ce que**
le tube ondulé (5) présente au moins ou exactement une fente (S) s'étendant sur toute sa longueur.

9. Dispositif de guidage (1) selon l'une quelconque des revendications précédentes,
**caractérisé en ce que**
le tube ondulé (5) est réalisé d'un seul tenant et/ou est formé d'une matière plastique.

10. Dispositif de guidage (1) selon l'une quelconque des revendications précédentes,
**caractérisé en ce que**
l'élément de boîtier (7) présente au moins ou exactement deux parties de boîtier (12, 13).

11. Dispositif de guidage (1) selon la revendication 10, **caractérisé en ce que**
les parties de boîtier (12, 13) sont réalisées séparément les unes des autres et reliées entre elles, notamment emboîtées les unes dans les autres.

12. Dispositif de guidage (1) selon la revendication 10 ou 11,
**caractérisé en ce que**
les parties de boîtier (12, 13) sont reliées entre elles de manière pivotante, notamment par une charnière à film.

13. Agencement (8) d'au moins un élément de conduite (2) dans un dispositif de guidage (1) selon une ou plusieurs des revendications 1 à 12.
